# EUROPEAN PATENT SPECIFICATION

(11) **EP 3 845 435 B1**
(45) Date of publication and mention of the grant of the patent: **06.04.2022**
(21) Application number: 20305002.6
(22) Date of filing: 03.01.2020
(51) Int. Cl.: B62D 1/187, B62D 1/18, B60K 35/00, B60K 37/00, B60K 37/02, B60K 37/04

(54) **VEHICLE INTERIOR ASSEMBLY COMPRISING AN ADJUSTABLE STEERING COLUMN AND A DISPLAY DEVICE MOVABLE JOINTLY WITH THE STEERING COLUMN**
FAHRZEUGINNENRAUMAUFBAU MIT EINER VERSTELLBAREN LENKSÄULE UND EINER MIT DER LENKSÄULE GEMEINSAM BEWEGLICHEN ANZEIGEVORRICHTUNG
ENSEMBLE INTÉRIEUR DE VÉHICULE COMPRENANT UNE COLONNE DE DIRECTION RÉGLABLE ET DISPOSITIF D'AFFICHAGE MOBILE CONJOINTEMENT AVEC LA COLONNE DE DIRECTION

(43) Date of publication of application: 07.07.2021
(73) Proprietor: Faurecia Intérieur Industrie, 92000 Nanterre (FR); ZF Friedrichshafen AG, 88046 Friedrichshafen (DE)
(72) Inventor: PONTHIEU, Didier, 60480 LA NEUVILLE SAINT PIERRE (FR); GUERREIRO, Pierre, 95580 MARGENCY (FR); DA CRUZ, Stéphane, 60240 Jouy-Sous-Thelle (FR)
(74) Representative: Lavoix

(56) References cited:
- EP-A1- 1 127 729
- EP-A1- 2 022 661
- DE-A1-102015 014 321
- FR-A1- 3 064 239
- JP-U- S5 833 327

## Description

The present invention relates to a vehicle interior assembly comprising an adjustable steering column and a display device for displaying information to the driver, the display device being movable jointly with the steering column.

An automotive vehicle generally comprises a steering column supporting a steering wheel usable by the driver of the vehicle to steer the steered wheels of the vehicle.

Drivers may have different sizes and different proportions, namely between legs and torso. In order to allow a variety of drivers to find a good driving position, it is possible to provide a steering column that is adjustable in height and reach.

The height adjustment may be obtained by providing a steering column that can be tilted in a vertical plane such that tilting of the steering column affects the vertical position of the steering wheel.

The reach adjustment may be obtained by providing a steering column that it slidably mounted along the steering column axis such that the driver can adjust the distance between the driver's seat and the steering wheel, i.e. the reach.

A locking device may be of course provided, the locking device being unlocked to allow adjustment of the steering column and locked to maintain the position of steering column chosen by the driver.

A display device, such as an instrument cluster, is generally positioned above the steering column and before the steering wheel when considering the forward moving direction of the vehicle, such that the driver can see the display device through the steering wheel.

The display device may be mounted stationary onto a dashboard structure of the vehicle.

In such case, adjusting the position of the steering column affects the relative position of the steering wheel and the display device, and some drivers may find that the vision of the display device is impaired by the steering wheel in their chosen driving position.

Besides, in vehicles possessing autonomous driving mode(s), it may be desirable to provide extra adjustment of the steering wheel, e.g. to improve roominess for the passenger during operation of the vehicle in an autonomous driving mode. Document EP 1 127 729 A1 discloses a vehicle interior assembly according to the preamble of claim 1.

One of the aims of the invention is to provide a vehicle interior assembly comprising an adjustable steering column and a display device, the vehicle interior assembly having improved ergonomics, allowing a wide adjustment range and allowing a good perceived quality.

To this end, the invention proposes a vehicle interior assembly comprising a dashboard structure, a steering column extending along a steering column axis and a display device for displaying information to a driver, the position of the steering column being adjustable relative to the dashboard structure for adjusting the height and the reach of the steering column, wherein the display device is slidably mounted onto the dashboard structure and slidably mounted along the steering column such as to move up and down relative to the dashboard structure jointly with the steering column when adjusting the height of the steering column and to be stationary relative to the dashboard structure without impairing the movement of the steering column when adjusting the reach of the steering column.

The display device mounted slidably onto the dashboard structure such as to move up and down along with the steering column can move as a function of the height adjustment with being guided precisely.

The display device mounted slidably onto the steering column can follow the up and down movements of the steering column with staying stationary relative to the dashboard structure when adjusting the reach of the steering column.

The display device can further be maintained in permanent engagement with the steering column for following the up and down movements of the steering column appropriately.

In specific embodiments, the vehicle interior assembly comprises one or several of the followings optional features, taken in isolation or in any technically feasible combination:
- the display device is slidably mounted onto the dashboard structure via at least one slide connection each slide connection comprising a slider sliding along a linear guide;
- the display device is slidably mounted onto the dashboard structure along a sliding line;
- the sliding line is rectilinear;
- the display device is movable in translation relative to the dashboard structure;
- the display device is permanently engaged with the steering column;
- the display device is slidably mounted onto the steering column via at least one slide connection, each slide connection comprising a slider sliding along a linear guide;
- the display device is slidably mounted onto the steering column via a following member supported by the display device and sliding along a linear track provided on the steering column;
- it comprises an engagement device configured to urge the display device into engagement with the steering column;
- the engagement device comprises at least one preloaded elastic member arranged for urging the display device into engagement with the steering column;
- the engagement device is configured to urged the display device downwardly;
- the display device is mounted slidable onto the steering column such as to authorize a tilting of the steering column relative to the display device;
- the steering column is mounted onto the dashboard structure such as to be tiltable relative to the dashboard structure about a pivoting axis substantially horizontal and perpendicular to the steering column axis in view of height adjustment;
- the display device is located above the steering column and/or the display device is located axially along the steering column between the dashboard structure and a rear end of the steering column intended to receive a steering wheel.

The invention also relates to a vehicle a vehicle interior assembly as defined above.

The invention and its advantages will be better understood upon reading the following description that is given solely by way of non-limiting example and with reference to the appended drawings, in which:
- Figures 1 and 2 are schematic side views of a vehicle interior assembly having an adjustable steering column respectively in a first position and a second position
- Figure 3 is a schematic view of the vehicle interior assembly illustrating mechanical connections between the steering column and other elements of the vehicle interior assembly;
- Figure 4 is a schematic side view of another example of a vehicle interior assembly having an adjustable steering column.

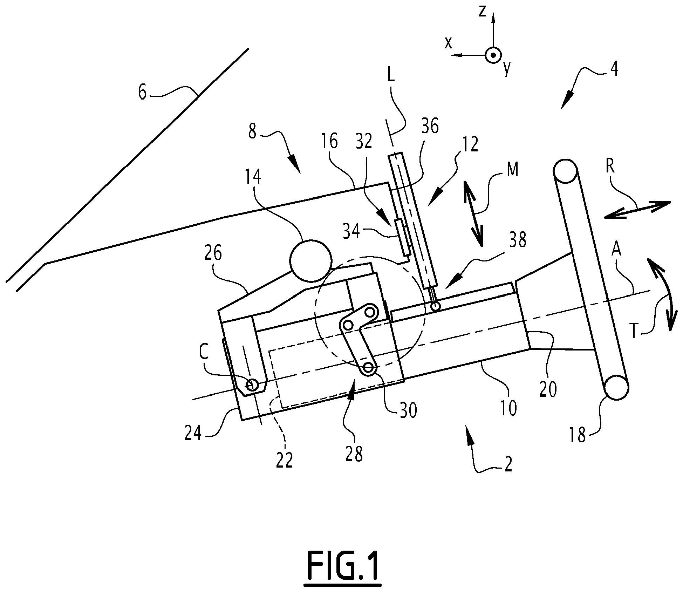

The vehicle interior assembly 2 of Figure 1 is installed inside a vehicle 4, for example an automotive vehicle. The vehicle 4 comprises here a windscreen 6.

In the following, the orientation terms "up", "down", "front", "rear", "longitudinal" and "transversal" are used with reference to the vehicle interior assembly 2 installed in the vehicle 4 and to the usual coordinate system of vehicles comprising:
- a longitudinal axis X, horizontal and orientated from rear to front;
- a transverse axis Y, horizontal and orientated from right to left;
- a vertical axis Z oriented from bottom to top;

The vehicle interior assembly 2 is configured for allowing a driver to steer the vehicle 4 and to display information to the driver. Such a vehicle interior assembly 2 may also referred to as a "cockpit".

The vehicle interior assembly 2 comprises a dashboard structure 8, a steering column 10 and a display device 12.

The dashboard structure 8 is fixedly attached to the vehicle body of the vehicle 4. The dashboard structure 8 comprises for example a dashboard cross-member 14 extending transversely between two lateral front pillars (or "A-pillars") of the vehicle body and a dashboard 16 fixedly attached to the dashboard cross-member 14.

The steering column 10 extends along a steering column axis A. The steering column 10 is configured to receive a steering wheel 18 at a rear end 20 of the steering column 10, the steering wheel 18 being pivotally mounted on to the steering column 10 about the steering column axis A.

In one example in which the steering wheel 18 is mechanically connected to steered wheels of the vehicle 4, the steering column 10 supports a steering shaft (not shown) extending through the steering column 10 along the steering column axis A for connecting the steering wheel 18 to the steered wheels, the steering shaft being pivotally mounted on to the steering column 10 about the steering column axis A.

In another example, the steering wheel 18 is not mechanically connected to the steered wheels of the vehicle 4 ("steer-by-wire"). In such an example, a steering system may be configured to detect the angular position of the steering wheel 18 about the steering column axis A via at least one angular position sensor and to control the orientation of the steered wheels as a function of the angular position of the steering wheel 18 using one or several actuator(s).

The steering column 10 is adjustable in height and reach relative to the dashboard structure 8. This allows the driver to position the steering wheel 18 in the desired position as a function of the size and proportions of the driver, such as to obtain a comfortable ergonomic driving position. It may also allow moving the steering wheel in a specific position during operation of the vehicle in an autonomous driving mode, e.g. to provide more space and more comfort to the driver.

More specifically, the position of the steering column 10 relative to the dashboard structure 8 is adjustable such as to adjust the vertical position of the rear end 20 of the steering column 10 (height adjustment) and to adjust the longitudinal position of the rear end 20 of the steering column 10 (reach adjustment).

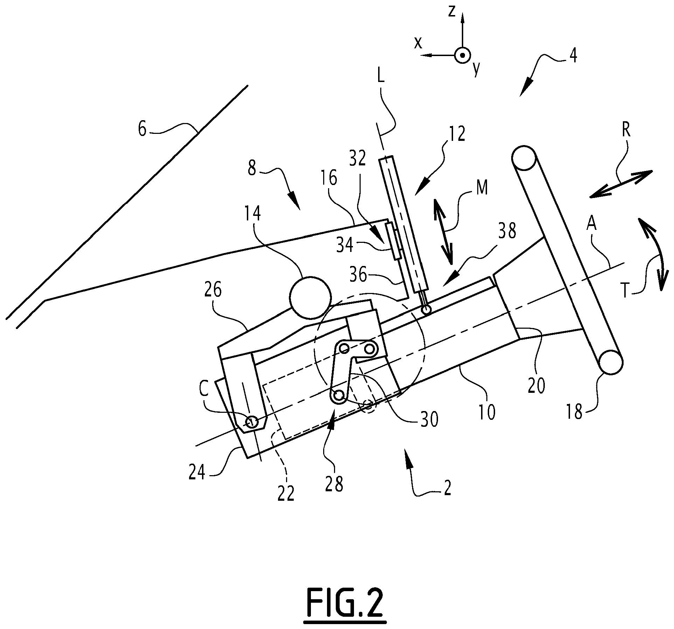

In one example the steering column 10 is tiltable relative to the dashboard structure 8 such a to adjust the vertical position the steering column 10, more specifically the vertical position of the rear end 20 of the steering column 10 (see arrow T on Figures 1 and 2).

In such case, the steering column 10 is tiltable about a pivot axis C that is substantially horizontal and perpendicular to the steering column axis A. The pivot axis C is substantially parallel to the transverse axis Y of the vehicle 4.

The pivot axis C is preferably located adjacent a front end 22 of the steering column 10. The front end 22 is opposed to the rear end 20 of the steering column 10 configured for receiving the steering wheel 18.

Tilting of the steering column 10 affects the vertical position of the rear end 20 of the steering column 10.

The steering column 10 is tiltable between a lowermost position (Figure 1) and an uppermost position (Figure 2).

The angular stroke of the steering column axis A between the lowermost position and the uppermost position is typically comprised between 2.5° and 30°.

At the lowermost position (Figure 1), the steering column axis A defines with a horizontal plane an angle typically comprised between 0° and 35°.

The steering column 10 is movable in translation along the steering column axis A relative to the dashboard structure 8 (see arrow R on Figures 1 and 2).

This allows adjusting the reach of the steering column 10. Translating the steering column 10 rearwards allows moving the steering wheel 18 closer to the driver. Translating the steering column 10 forward allows moving the steering wheel 18 away from the driver.

In one example, the steering column 10 is slidably mounted onto a column support 24, the column support 24 being mounted in rotation about the pivot axis C onto the dashboard structure 8, e.g. via a bracket 26 fixedly attached to the dashboard cross-member 14.

The vehicle interior assembly 2 comprise for example a locking device 28 configured to selectively lock the steering column 10 in its current position or unlock the steering column 10 for adjusting the position of the steering column 10.

The locking device 28 is for example configured to clamp the steering column transversely such as to lock the steering column 10 in position.

The locking device 28 comprises for example a locking member 30 that is operable to lock/unlock the locking device 28. The locking member 30 is e.g. manually operable by the driver. The locking member 30 is e.g. pivotal lever manually operable by the driver. In an alternative embodiment, the locking member 30 is automatically operable, e.g. by an actuator of the locking device 28.

In alternative embodiment, the adjustment of the steering column 10 may partially or fully automated.

In such case, the vehicle interior assembly 2 thus comprises an automated adjusting system comprising at least one actuator, e.g. an electrically powered actuator, configured to adjust the position of the steering column 10, e.g. the height of the steering column 10 and/or the reach of the steering column 10.

In particular, such an automated adjusting system may advantageously be configured to move the steering column 10 to its most forward position (maximum reach) and/or to its uppermost position (maximum height) when an autonomous driving mode of the vehicle 4 is activated.

The display device 12 is configured for displaying information to the driver. The display device 12 may also be referred to as an "instrument cluster". The display device 12 is orientated rearwards such as to be visible by the driver.

The display device 12 is generally configured for displaying information useful to the driver when driving the vehicle 4.

The display device 12 is configured e.g. for displaying information relative to the operation of the vehicle (speed, revs, oil temperature, cooling fluid temperature, odometer...), information relative to navigation (map and/or information provided by a satnav system) and/or information relative to an infotainment system (selected radio station, sound volume...).

The display device 12 may comprise at least one analog display and/or at least one digital display.

The display device 12 is positioned axially along the steering column 10, between the rear end 20 of the steering column 10 and the dashboard structure 8.

The display device 12 is preferably positioned above the steering column 10.

Such a display device 12 is for example visible by the driver through the steering wheel 18 supported at the rear end 20 of the steering column 10.

The display device 12 is slidably mounted on the dashboard structure 8 such as to move up and down relative to the dashboard structure 8 (see arrow M on Figures 1 and 2) and is slidably mounted on the steering column 10 along the steering column axis A.

More specifically, the display device 12 is slidably mounted on the dashboard structure 8 and slidably mounted onto the steering column 10 such as to move up and down relative to the dashboard structure 8 jointly with the steering column 10 when adjusting the height of the steering column 10 and to be stationary relative to the dashboard structure 8 without impairing the movement of the steering column 10 when adjusting the reach of the steering column 10.

The display device 12 is slidably mounted on the dashboard structure 8 along a sliding line L.

The sliding line L extends relative to the dashboard structure 8 such that the display device 12 is movable up and down relative to the dashboard structure 8 with the steering column 10 when adjusting the height thereof.

The sliding line L extends in a longitudinal vertical plane, i.e. a plane parallel to the plane defined by the longitudinal axis X and the vertical axis Z.

The sliding line L defines preferably with the steering column axis A an angle comprises between 65° and 115°.

The sliding line L defines preferably with the vertical axis Z an angle that is comprised between 0° and 55°. The display device 12 can thus be orientated rearwards and slightly upwards.

As illustrated on Figures 1 and 2, the sliding line L is for example rectilinear. In an alternative, the sliding line L may exhibit a slight curvature.

As illustrated on Figures 1 and 2, the display device 12 is preferably movable in translation relative to the dashboard structure 8. Hence, the display device 12 keeps the same orientation relative to the dashboard structure 8 when sliding up and down relative to the dashboard structure 8.

As illustrated on Figures 1 and 2, the display device 12 is for example movable in rectilinear translation relative to the dashboard structure 8, i.e. movable in translation along a rectilinear sliding line L.

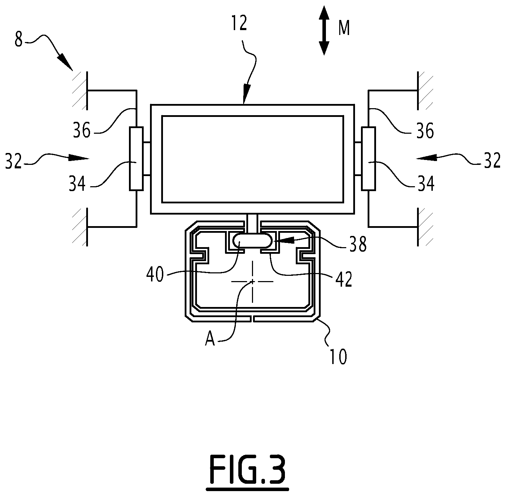

As illustrated on Figure 3, the display device 12 is mounted onto the dashboard structure 8 for example via at least one slide connection 32, each slide connection 32 comprising a slider 34 sliding along a linear guide 36.

The slider 34 is fixedly mounted on one of the dashboard structure 8 and the display device 12, the linear guide 36 being fixedly mounted on the other.

In one example, as illustrated on Figure 3, the slider 34 is fixedly mounted on the display device 12, the linear guide 36 being fixedly mounted on the dashboard structure 8.

In another example, the slider 34 is fixedly mounted on the dashboard structure 8, the linear guide 36 being fixedly mounted on the display device 12.

As illustrated on Figure 3, the display device 12 is mounted onto the dashboard structure 8 via two slide connections 32. In other example, one single slide connection 32 is provided or more than two slide connections 32 are provided.

The display device 12 is slidably mounted onto the steering column 10 along the direction of the steering column axis A. Hence, the display device 12 can stay stationary relative to the dashboard structure 8 when the steering column 10 slides relative to the dashboard structure 8 along the steering column axis A.

The display device 12 is slidably mounted onto the dashboard structure 8 such that the display device 12 is stationary relative to the dashboard structure 8 along the steering column axis A.

This is the case when the display device 12 is slidably mounted onto the dashboard structure 8 along the sliding line L that is at an angle relative to the steering column axis A, in particular when the sliding line L is approximately perpendicular to the steering column axis A.

Preferably, the display device 12 is permanently engaged with the steering column 10. Hence, the display device 12 remains vertically substantially in the same position relative to the steering column 10.

In one example, the display device 12 is slidably connected to the steering column 10 such that display device 12 is permanently connected to the steering column 10 in the direction of sliding of the display device 12 relative to the dashboard 8.

The display device 12 is slidably connected to the steering column 10 such that the steering column 10 moving upwards during height adjustment moves the display device 12 upwards and the steering column 10 moving downwards during height adjustment moves the display device 12 downwards.

As illustrated in Figure 3, the display device 12 is for example connected to the steering column 10 via a slide connection 38 configured such that the display device 12 slidable relative to the steering column 10 along the steering column axis A and stationary relative to the steering column 10 in the direction of sliding of the display device 12 relative to the dashboard 8.

The slide connection 38 comprises here a slider 40 provided on the display device 12, the slider 40 being slidably received in a linear guide 42 provided on the steering column 10 and extending along the steering column axis A, the slide 40 and the linear guide 42 cooperating to prevent them from moving away from each other perpendicularly to the steering column axis A.

As illustrated on Figure 3, in one example, the linear guide 42 is tubular and has a cross-section configured such that the slider 40 is received inside the linear guide 42 and cannot exit the linear guide 42 perpendicularly to the steering column axis A.

When the height adjustment is obtained by tilting the steering column 10 relative to the dashboard structure 10 about the pivot axis C, the steering column 10 may tilt relative to the display device 12.

In one example, the display device 12 is slidably mounted onto the steering column 10 such as to allow tilting of the steering column 10 relative to the display device 12.

As illustrated on Figure 3, the slider 40 may be shaped such as to allow a rotational degree of freedom between the display device 12 and the steering column 10 about a rotation axis parallel to the pivot axis C. The slider 40 may for example cylindrical or rounded.

Alternatively or optionally, the slider 40 may be mounted onto the display device 12 via a connection having a rotational degree of freedom about a rotation axis parallel to the pivot axis C, e.g. a pivot connection.

In operation, the locking device 28 is initially locked and the steering column 10 is stationary relative to the dashboard structure 8. In view of adjusting the height and/or the reach of the steering wheel 18, the driver unlocks the locking device 28.

The driver can thus move the steering wheel 18 along the steering column axis A to adjust the reach and/or move the steering wheel 18 up or down to adjust the height. Once the desired position is reached, the driver lock the locking device 28.

When adjusting the reach, the display device 12 remains stationary relative to the dashboard structure 8. When adjusting the height, the display device 12 moves relative to the dashboard structure 8 jointly with the steering column 10 and the steering wheel 18.

The display device 12 thus remains visible for the driver whatever the adjustment of the steering column 10. In addition, it does not stop the upper adjustment of the steering column.

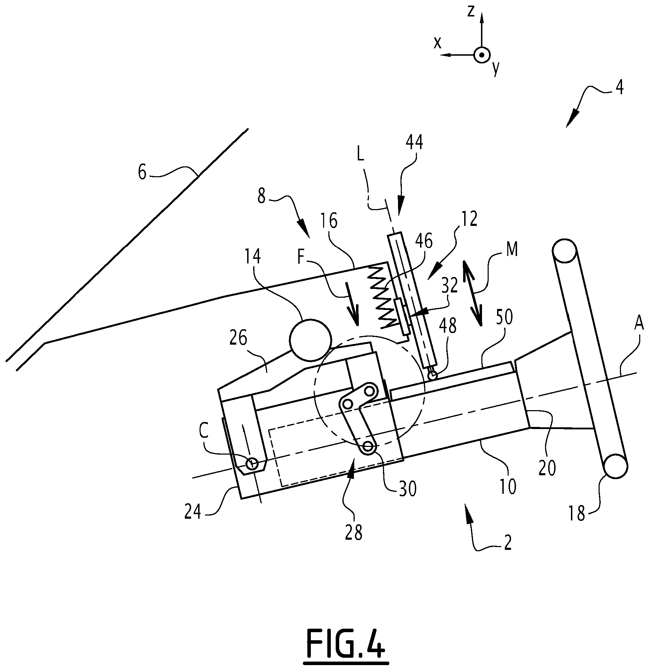

Optionally, as illustrated on Figure 4, the vehicle interior assembly 2 comprises an engaging assembly 44 configured for permanently urging the display device 12 into engagement with the steering column 10.

The engaging assembly 44 comprises for example at least one preloaded elastic member 46 arranged to permanently urge the display device 12 into engagement with the steering column 10 (see arrow F on Figure 4).

The engaging assembly 44 is for example configured to permanently urge the display device 12 downwardly into engagement with the steering column 10. Each elastic member 46 permanently urges the display device 12 downwardly into engagement with the steering column 10.

The provision of the engaging assembly 44 allows maintaining the display device 12 engaged with the steering column 10 with replacing the slide connection 38 by a following member 48 provided on the display device 12 and sliding along a track 50 provided on the steering column 10.

The track 50 is for example not configured for preventing the following member 48 from lifting off the track 50, but the following member 48 is kept in contact with the track 50 due do the engaging assembly 44 acting onto the display device 12.

With the vehicle interior assembly of the invention, it is possible to adjust the height and the reach of the steering column 10 with the display device 12 following the up and down movements of the steering column 10, without following the reach adjusting movement of the steering column 10. As a result, the display device 12 visible for the driver whatever the position of the steering column 10 relative to the dashboard structure 8.

The display device 12 slidably mounted onto the dashboard structure 8, in particular mounted in translation relative to the dashboard structure 8 and more particularly in rectilinear translation relative to the dashboard structure 8, has a very simple movement relative to the dashboard structure 8.

This enables to reach a good fit at the interface between the dashboard structure 8 and the display device 12, and thus a good perceived quality for the user.

These advantages can be obtained even with a steering column 10 having unusually large strokes for height adjustment and reach adjustment, as it can be the case for example in autonomous vehicles.

## Claims

1. Vehicle interior assembly comprising a dashboard structure (8), a steering column (10) extending along a steering column axis (A) and a display device (12) for displaying information to a driver, the position of the steering column (10) being adjustable relative to the dashboard structure (8) for adjusting the height and the reach of the steering column (10), **characterised in that** the display device (12) is slidably mounted onto the dashboard structure (8) and slidably mounted along the steering column (10) such as to move up and down relative to the dashboard structure (8) jointly with the steering column (10) when adjusting the height of the steering column (10) and to be stationary relative to the dashboard structure (8) without impairing the movement of the steering column (10) when adjusting the reach of the steering column (10).

2. Vehicle interior assembly according to claim 1, wherein the display device (12) is slidably mounted onto the dashboard structure (8) via at least one slide connection (32) each slide connection (32) comprising a slider (34) sliding along a linear guide (36).

3. Vehicle interior assembly according to claim 1 or claim 2, wherein the display device (12) is slidably mounted onto the dashboard structure (8) along a sliding line (L).

4. Vehicle interior assembly according to claim 3, wherein the sliding line (L) is rectilinear.

5. Vehicle interior assembly according to anyone of the preceding claims, wherein the display device (12) is movable in translation relative to the dashboard structure (8).

6. Vehicle interior assembly according to anyone of the preceding claims, wherein the display device (12) is permanently engaged with the steering column (10).

7. Vehicle interior assembly according to anyone of the preceding claims, wherein the display device (12) is slidably mounted onto the steering column (10) via at least one slide connection (38), each slide connection (38) comprising a slider (40) sliding along a linear guide (42).

8. Vehicle interior assembly according to anyone of the preceding claims, wherein the display device (12) is slidably mounted onto the steering column (10) via a following member (48) supported by the display device (12) and sliding along a linear track (50) provided on the steering column (10).

9. Vehicle interior assembly according to anyone of the preceding claims, comprising an engagement device (44) configured to urge the display device (12) into engagement with the steering column (10).

10. Vehicle interior assembly according to claim 9, wherein the engagement device (44) comprises at least one preloaded elastic member (46) arranged for urging the display device (12) into engagement with the steering column (10).

11. Vehicle interior assembly according to claim 9 or 10, wherein the engagement device (44) is configured to urge the display device (12) downwardly.

12. Vehicle interior assembly according to anyone of the preceding claims, wherein the display device (12) is mounted slidable onto the steering column (10) such as to authorize a tilting of the steering column (10) relative to the display device (12).

13. Vehicle interior assembly according to anyone of the preceding claims, wherein the steering column (10) is mounted onto the dashboard structure (8) such as to be tiltable relative to the dashboard structure (8) about a pivoting axis (C) substantially horizontal and perpendicular to the steering column axis (A) in view of height adjustment.

14. Vehicle interior assembly according to anyone of the preceding claims, wherein the display device (12) is located above the steering column (10) and/or the display device (12) is located axially along the steering column (10) between the dashboard structure (8) and a rear end (20) of the steering column (10) intended to receive a steering wheel (18).

15. Vehicle comprising a vehicle interior assembly according to anyone of the preceding claims.

## Patentansprüche

1. Fahrzeuginnenraumanordnung, umfassend eine Armaturenbrettstruktur (8), eine Lenksäule (10), die sich entlang einer Lenksäulenachse (A) erstreckt, und eine Anzeigevorrichtung (12) zum Anzeigen von Informationen für einen Fahrer, wobei die Position der Lenksäule (10) in Bezug auf die Armaturenbrettstruktur (8) einstellbar ist, um die Höhe und die Reichweite der Lenksäule (10) einzustellen, **dadurch gekennzeichnet, dass** die Anzeigevorrichtung (12) verschiebbar an der Armaturenbrettstruktur (8) und verschiebbar entlang der Lenksäule (10) montiert ist, um sich zusammen mit der Lenksäule (10) in Bezug auf die Armaturenbrettstruktur (8) auf und ab zu bewegen, wenn die Höhe der Lenksäule (10) eingestellt wird, und in Bezug auf die Armaturenbrettstruktur (8) stationär ist, ohne die Bewegung der Lenksäule (10) zu beeinträchtigen, wenn die Reichweite der Lenksäule (10) eingestellt wird.

2. Fahrzeuginnenausstattung nach Anspruch 1, wobei die Anzeigevorrichtung (12) über mindestens eine Gleitverbindung (32) verschiebbar an der Armaturenbrettstruktur (8) montiert ist, wobei jede Gleitverbindung (32) einen Gleiter (34) umfasst, der entlang einer linearen Führung (36) gleitet.

3. Fahrzeuginnenraumanordnung nach Anspruch 1 oder Anspruch 2, wobei die Anzeigevorrichtung (12) entlang einer Gleitlinie (L) verschiebbar an der Armaturenbrettstruktur (8) montiert ist.

4. Fahrzeuginnenraumanordnung nach Anspruch 3, wobei die Gleitlinie (L) geradlinig ist.

5. Fahrzeuginnenraumanordnung nach einem der vorherigen Ansprüche, wobei die Anzeigevorrichtung (12) in Bezug auf die Armaturenbrettstruktur (8) translatorisch beweglich ist.

6. Fahrzeuginnenraumanordnung nach einem der vorherigen Ansprüche, wobei die Anzeigevorrichtung (12) permanent mit der Lenksäule (10) in Eingriff ist.

7. Fahrzeuginnenraumanordnung nach einem der vorherigen Ansprüche, wobei die Anzeigevorrichtung (12) über mindestens eine Gleitverbindung (38) verschiebbar an der Lenksäule (10) montiert ist, jede Gleitverbindung (38) umfassend einen Gleiter (40), der entlang einer linearen Führung (42) gleitet.

8. Fahrzeuginnenraumanordnung nach einem der vorherigen Ansprüche, wobei die Anzeigevorrichtung (12) über ein von der Anzeigevorrichtung (12) getragenes und entlang einer an der Lenksäule (10) vorgesehenen linearen Spur (50) verschiebbares Folgeelement (48) verschiebbar an der Lenksäule (10) montiert ist.

9. Fahrzeuginnenraumanordnung nach einem der vorherigen Ansprüche, umfassend eine Eingriffsvorrichtung (44), die konfiguriert ist, um die Anzeigevorrichtung (12) in Eingriff mit der Lenksäule (10) zu drücken.

10. Fahrzeuginnenraumanordnung nach Anspruch 9, wobei die Eingriffsvorrichtung (44) mindestens ein vorgespanntes elastisches Element (46) umfasst, das angeordnet ist, um die Anzeigevorrichtung (12) in Eingriff mit der Lenksäule (10) zu drücken.

11. Fahrzeuginnenraumanordnung nach Anspruch 9 oder 10, wobei die Eingriffsvorrichtung (44) konfiguriert ist, um die Anzeigevorrichtung (12) nach unten zu drücken.

12. Fahrzeuginnenraumanordnung nach einem der vorherigen Ansprüche, wobei die Anzeigevorrichtung (12) verschiebbar an der Lenksäule (10) montiert ist, um ein Kippen der Lenksäule (10) in Bezug auf die Anzeigevorrichtung (12) zu ermöglichen.

13. Fahrzeuginnenraumanordnung nach einem der vorherigen Ansprüche, wobei die Lenksäule (10) an der Armaturenbrettstruktur (8) montiert ist, um in Bezug auf die Armaturenbrettstruktur (8) um eine im Wesentlichen horizontale und senkrecht zu der Lenksäulenachse (A) verlaufende Schwenkachse (C) im Hinblick auf eine Höheneinstellung schwenkbar zu sein.

14. Fahrzeuginnenraumanordnung nach einem der vorherigen Ansprüche, wobei die Anzeigevorrichtung (12) oberhalb der Lenksäule (10) angeordnet ist und/oder die Anzeigevorrichtung (12) axial entlang der Lenksäule (10) zwischen der Armaturenbrettstruktur (8) und einem hinteren Ende (20) der Lenksäule (10) angeordnet ist, das zum Aufnehmen eines Lenkrads (18) bestimmt ist.

15. Fahrzeug, umfassend eine Fahrzeuginnenraumanordnung nach einem der vorherigen Ansprüche.

## Revendications

1. Ensemble intérieur de véhicule comprenant une structure de tableau de bord (8), une colonne de direction (10) s'étendant le long d'un axe de colonne de direction (A) et un dispositif d'affichage (12) destiné à afficher des informations pour un conducteur, la position de la colonne de direction (10) étant réglable par rapport à la structure de tableau de bord (8) pour régler la hauteur et la portée de la colonne de direction (10), **caractérisé en ce que** le dispositif d'affichage (12) est monté de manière coulissante sur la structure de tableau de bord (8) et monté de manière coulissante le long de la colonne de direction (10) de manière à se déplacer vers le haut et vers le bas par rapport à la structure de tableau de bord (8) conjointement avec la colonne de direction (10) lors du réglage de la hauteur de la colonne de direction (10) et à être fixe par rapport à la structure de tableau de bord (8) sans entraver le mouvement de la colonne de direction (10) lors du réglage de la portée de la colonne de direction (10).

2. Ensemble intérieur de véhicule selon la revendication 1, dans lequel le dispositif d'affichage (12) est monté de manière coulissante sur la structure de tableau de bord (8) par l'intermédiaire d'au moins une liaison coulissante (32), chaque liaison coulissante (32) comprenant un coulisseau (34) coulissant le long d'un guide linéaire (36).

3. Ensemble intérieur de véhicule selon la revendication 1 ou la revendication 2, dans lequel le dispositif d'affichage (12) est monté de manière coulissante sur la structure de tableau de bord (8) le long d'une ligne de coulissement (L).

4. Ensemble intérieur de véhicule selon la revendication 3, dans lequel la ligne de coulissement (L) est rectiligne.

5. Ensemble intérieur de véhicule selon l'une quelconque des revendications précédentes, dans lequel le dispositif d'affichage (12) est mobile en translation par rapport à la structure de tableau de bord (8).

6. Ensemble intérieur de véhicule selon l'une quelconque des revendications précédentes, dans lequel le dispositif d'affichage (12) est en prise permanente avec la colonne de direction (10).

7. Ensemble intérieur de véhicule selon l'une quelconque des revendications précédentes, dans lequel le dispositif d'affichage (12) est monté de manière coulissante sur la colonne de direction (10) par l'intermédiaire d'au moins une liaison coulissante (38), chaque liaison coulissante (38) comprenant un coulisseau (40) coulissant le long d'un guide linéaire (42).

8. Ensemble intérieur de véhicule selon l'une quelconque des revendications précédentes, dans lequel le dispositif d'affichage (12) est monté de manière coulissante sur la colonne de direction (10) par l'intermédiaire d'un élément suiveur (48) supporté par le dispositif d'affichage (12) et coulissant le long d'une piste linéaire (50) prévue sur la colonne de direction (10).

9. Ensemble intérieur de véhicule selon l'une quelconque des revendications précédentes, comprenant un dispositif de mise en prise (44) configuré pour pousser le dispositif d'affichage (12) de sorte que celui-ci vienne en prise avec la colonne de direction (10).

10. Ensemble intérieur de véhicule selon la revendication 9, dans lequel le dispositif de mise en prise (44) comprend au moins un élément élastique préchargé (46) agencé pour pousser le dispositif d'affichage (12) de sorte que celui-ci vienne en prise avec la colonne de direction (10).

11. Ensemble intérieur de véhicule selon la revendication 9 ou 10, dans lequel le dispositif de mise en prise (44) est configuré pour pousser le dispositif d'affichage (12) vers le bas.

12. Ensemble intérieur de véhicule selon l'une quelconque des revendications précédentes, dans lequel le dispositif d'affichage (12) est monté de manière coulissante sur la colonne de direction (10) de manière à autoriser une inclinaison de la colonne de direction (10) par rapport au dispositif d'affichage (12).

13. Ensemble intérieur de véhicule selon l'une quelconque des revendications précédentes, dans lequel la colonne de direction (10) est montée sur la structure de tableau de bord (8) de manière à pouvoir être inclinée par rapport à la structure de tableau de bord (8) autour d'un axe de pivotement (C) sensiblement horizontal et perpendiculaire à l'axe de colonne de direction (A) en vue d'un réglage de hauteur.

14. Ensemble intérieur de véhicule selon l'une quelconque des revendications précédentes, dans lequel le dispositif d'affichage (12) est situé au-dessus de la colonne de direction (10) et/ou le dispositif d'affichage (12) est situé axialement le long de la colonne de direction (10) entre la structure de tableau de bord (8) et une extrémité arrière (20) de la colonne de direction (10) destinée à recevoir un volant (18).

15. Véhicule comprenant un ensemble intérieur de véhicule selon l'une quelconque des revendications précédentes.
